# EUROPÄISCHE PATENTSCHRIFT

(11) **EP 2 843 209 B1**
(45) Veröffentlichungstag und Bekanntmachung des Hinweises auf die Patenterteilung: **06.01.2021**
(21) Anmeldenummer: 14180750.3
(22) Anmeldetag: 13.08.2014
(51) Int. Cl.: F02B 75/04

(54) **VERBRENNUNGSMOTOR UND PLEUELSTANGE**
COMBUSTION ENGINE AND CONNECTING ROD
MOTEUR À COMBUSTION INTERNE ET BIELLE

(30) Priorität: 27.08.2013 DE 102013014090
(43) Veröffentlichungstag der Anmeldung: 04.03.2015
(73) Patentinhaber: Dr. Ing. h.c. F. Porsche AG, 70435 Stuttgart (DE); Hilite Germany GmbH, 97828 Marktheidenfeld (DE)
(72) Erfinder: Paul, Michael, 71287 Weissach (DE); Schulze, Dietmar, 35516 Münzenberg (DE)
(74) Vertreter: Sturm, Christoph

(56) Entgegenhaltungen:
- EP-A1- 1 424 486
- DE-A1-102005 055 199
- US-A1- 2010 012 095
- US-B1- 7 469 663

## Beschreibung

Die Erfindung betrifft eine Pleuelstange für einen Verbrennungsmotor und einen Verbrennungsmotor.

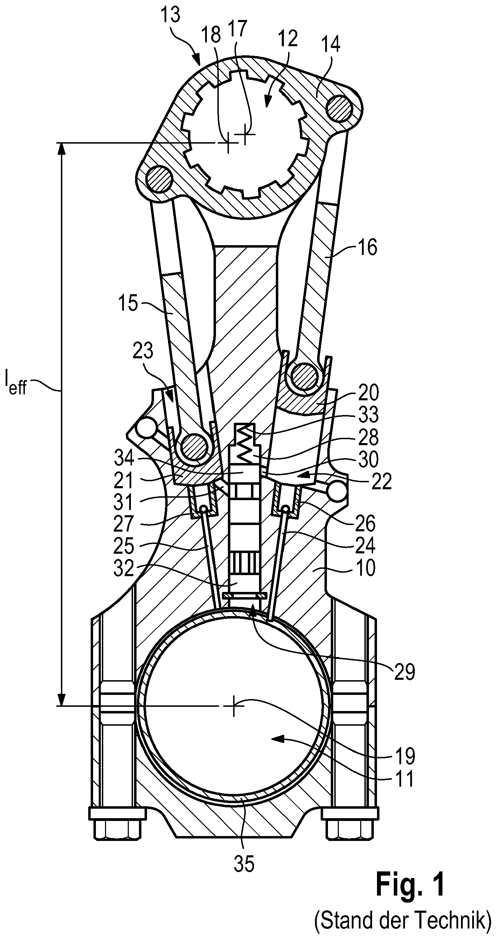

Fig. 1 zeigt ein aus der DE 10 2010 016 037 A1 bekanntes Detail eines Verbrennungsmotors mit einem einstellbaren Verdichtungsverhältnis im Bereich einer Pleuelstange. So ist in Fig. 1 eine Pleuelstange 10 gezeigt, die über ein Hublagerauge 11 und ein Pleuellagerauge 12 verfügt, wobei das Hublagerauge 11 der Anbindung der Pleuelstange 10 an eine in Fig. 1 nicht gezeigte Kurbelwelle und das Pleuellagerauge 12 der Anbindung der Pleuelstange 10 an einen in Fig. 1 nicht gezeigten Zylinderkolben des Verbrennungsmotors dient. Der Pleuelstange 10 ist eine Exzenter-Verstelleinrichtung 13 zugeordnet, die einen in Fig. 1 nicht gezeigten Exzenter, einen Exzenterhebel 14 und Exzenterstangen 15, 16 aufweist. Der Exzenterhebel 14 weist eine exzentrisch zu einem Mittelpunkt 17 des Pleuellagerauges 12 angeordnete Bohrung mit einem Mittelpunkt 18 auf, wobei die Bohrung im Exzenterhebel 14 den Exzenter und eine Bohrung im Exzenter einen Kolbenbolzen aufnimmt. Die Exzenter-Verstelleinrichtung 13 dient der Verstellung einer effektiven Pleuelstangenlänge l_{eff}, wobei als Pleuelstangenlänge der Abstand des Mittelpunkts 18 der Bohrung im Exzenterhebel 14 zu einem Mittelpunkt 19 des Hublagerauges 11 zu verstehen ist. Zur Verdrehung des Exzenterkörpers 14 und damit zur Veränderung der effektiven Pleuelstangenlänge l_{eff} sind die Exzenterstangen 15, 16 der Exzenter-Verstelleinrichtung 13 verlagerbar. Jeder Exzenterstange 15, 16 ist ein Kolben 20, 21 zugeordnet, der in einer Hydraulikkammer 22, 23 verschiebbar gelagert bzw. geführt ist. In den Hydraulikkammern 22, 23 herrscht ein Hydraulikdruck, der auf die den Exzenterstangen 15, 16 zugeordneten Kolben 20, 21 einwirkt, wobei abhängig von der Ölmenge in den Hydraulikkammern 22, 23 die Verlagerung der Exzenterstangen 15, 16 möglich ist oder nicht möglich ist.

Die Verstellung der Exzenter-Verstelleinrichtung 13 wird durch Einwirken von Massen- und Lastkräften des Verbrennungsmotors initiiert, die bei einem Arbeitstakt des Verbrennungsmotors auf die Exzenter-Verstelleinrichtung 13 wirken. Während eines Arbeitstakts verändern sich die Wirkungsrichtungen der auf die Exzenter-Verstelleinrichtung 13 wirkenden Kräfte ständig. Die Verstellbewegung wird durch die mit Hydrauliköl beaufschlagten Kolben 20, 21, die auf die Exzenterstangen 15, 16 einwirken, unterstützt, wobei die Kolben 20, 21 ein Rückstellen der Exzenter-Verstelleinrichtung 13 aufgrund variierender Kraftwirkungsrichtungen der auf die Exzenter-Verstelleinrichtung 13 wirkenden Kräfte verhindern. Die Exzenterstangen 15, 16, die mit den Kolben 20, 21 zusammenwirken, sind beidseitig an den Exzenterkörper 14 angebunden. Die Hydraulikkammern 22 und 23, in welchen die Kolben 20, 21 geführt sind, sind über Hydraulikölleitungen 24 und 25 von dem Hublagerauge 11 aus mit Hydrauliköl beaufschlagbar. Rückschlagventile 26 und 27 verhindern ein Rückfließen des Hydrauliköls aus den Hydraulikkammern 23 und 24 zurück in die Hydraulikleitungen 24 und 25. In einer Bohrung 28 der Pleuelstange 10 ist ein Umschaltventil 29 aufgenommen, dessen Funktion ebenfalls bereits aus der DE 10 2010 016 037 A1 bekannt ist, wobei die Schaltstellung des Umschaltventils 29 bestimmt, welche der Hydraulikkammern 22 und 23 mit Hydrauliköl befüllt und welche der Hydraulikkammern 22 und 23 entleert wird, wobei hiervon die Verstellrichtung bzw. Verdrehrichtung der Exzenter-Verstelleinrichtung 13 abhängt. Die Hydraulikkammern 22 und 23 stehen dabei über Fluidleitungen 30 bzw. 31 mit der Bohrung 28 in Kontakt, welche das Umschaltventil 29 aufnimmt. Vom Umschaltventil 29 sind in Fig. 1 ein Betätigungsmittel 32, eine Federeinrichtung 33 und ein Steuerkolben 34 schematisiert gezeigt, wobei die Funktion dieser Bauelemente des Umschaltventils 29 bereits aus der DE 10 2010 016 037 A1 bekannt ist.

Wie oben ausgeführt, wird das Hydrauliköl, welches auf die in den Hydraulikkammern 22, 23 geführten Kolben 20, 21 einwirkt, den Hydraulikkammern 22, 23 ausgehend vom Hublagerauge 11 über Hydraulikleitungen 24 und 25 zugeführt, wobei die Pleuelstange 10 derart mit dem Hublagerauge 11 an der in Fig. 1 nicht gezeigten Kurbelwelle angreift, dass zwischen der Kurbelwelle, nämlich einem Kurbelwellenlagerzapfen derselben, und dem Hublagerauge eine Pleuellagerschale 35 angeordnet ist.

Aus der DE 10 2005 055 199 A1 sind weitere Details eines solchen Verbrennungsmotors mit einem einstellbaren Verdichtungsverhältnis bekannt, wobei es diesem Stand der Technik bekannt ist, den Exzenterhebel, an welchem die Exzenterstangen angreifen, in eine schlitzartige Ausnehmung im Pleuellagerauge einzusetzen. Zur Montage wird der Exzenterhebel, der eine Bohrung mit einer Innenverzahnung aufweist, in die schlitzartige Ausnehmung des Pleuellagerauges eingesetzt, wobei anschließend der Exzenter, der eine Außenverzahnung aufweist, in die Bohrung des Exzenterhebels eingesetzt wird. Der Exzenter und der Exzenterhebel sind über die ineinander greifenden Verzahnungen miteinander verbunden. Die Verbindung des Exzenters mit dem Exzenterhebel über die ineinander eingreifenden Verzahnungen erfordert einen hohen Fertigungs- und Montageaufwand und ist verschleißanfällig.

Die EP 1 424 486 A1 offenbart eine weitere aus dem Stand der Technik bekannte Pleuelstange.

Aufgabe der Erfindung ist es, eine neuartige Pleuelstange und einen neuartigen Verbrennungsmotor und zu schaffen, der bzw. die die Nachteile des Stands der Technik vermeidet.

Diese Aufgabe wird durch eine Pleuelstange gemäß Anspruch 1 gelöst.

Mit der hier vorliegenden Erfindung ist es erstmals möglich, den Exzenter mit dem oder jedem Exzenterhebelsegment des Exzenterhebels fest zu verbinden und auf Verzahnungen am Exzenter sowie Exzenterhebel zu verzichten. Hierdurch kann der Fertigungs- und Montageaufwand reduziert werden, ebenso wie die Verschleißanfälligkeit.

Vorzugsweise weist der Exzenterhebel zwei Exzenterhebelsegmente aufweist, wobei ein erstes Exzenterhebelsegment in Axialrichtung des Exzenters vor dem Pleuellagerauge und ein zweites Exzenterhebelsegment in Axialrichtung des Exzenters hinter neben dem Pleuellagerauge positioniert ist, derart, dass das Pleuellagerauge zwischen den beiden Exzenterhebelsegmenten positioniert ist. Dann, wenn der Exzenter zwei Exzenterhebelsegmente aufweist, zwischen welchen das Pleuellagerauge positioniert ist, ist eine besonders vorteilhafte Verlagerung des Exzenterhebels bei der Verstellung der effektiven Pleuelstangenlänge möglich.

Nach einer vorteilhaften Weiterbildung der Erfindung weist der Exzenter eine abgestufte Außenkontur mit einem Absatz auf, wobei der Absatz die Einführtiefe des Exzenters in den Exzenterhebel beschränkt. Der Absatz am Exzenter vereinfacht die Montage.

Nach einer vorteilhaften Weiterbildung der Erfindung ist das oder jedes Exzenterhebelsegment des Exzenterhebels mit dem Exzenter verschweißt. Das Verbinden des oder jedes Exzenterhebelsegments des Exzenterhebels mit dem Exzenter durch Verschweißen ist besonders einfach und verschleißunanfällig.

Der Verbrennungsmotor ist in Anspruch 7 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Detail eines aus dem Stand der Technik bekannten Verbrennungsmotors mit einstellbarem Verdichtungsverhältnis;
- Fig. 2: ein Detail eines erfindungsgemäßen Verbrennungsmotors mit einstellbarem Verdichtungsverhältnis;
- Fig. 3: ein Detail der Fig. 2;
- Fig. 4: ein weiteres Detail der Fig. 2;
- Fig. 5: Baugruppen der Fig. 4 in Explosionsdarstellung;
- Fig. 6: eine Alternative zum Detail der Fig. 2;
- Fig. 7: Baugruppen der Fig. 6 in Draufsicht;
- Fig. 8: ein weiteres Detail des erfindungsgemäßen Verbrennungsmotors;
- Fig. 9: eine weitere Alternative zum Detail der Fig. 2;
- Fig. 10: Baugruppen der Fig. 9 in Explosionsdarstellung; und
- Fig. 11: eine weitere Alternative zum Detail der Fig. 2;

Ein Verbrennungsmotor mit einem einstellbaren Verdichtungsverhältnis weist mindestens einen, vorzugsweise mehrere, Zylinder auf. Jeder Zylinder verfügt über einen Kolben, der über eine Pleuelstange 10 an eine Kurbelwelle des Verbrennungsmotors gekoppelt ist. Jede Pleuelstange 10 verfügt an einem Ende über ein Pleuellagerauge 12 und an einem gegenüberliegenden Ende über ein Hublagerauge 11. Die jeweilige Pleuelstange 10 greift mit ihrem Hublagerauge 11 derart an einem Kurbelwellenlagerzapfen der Kurbelwelle an, dass zwischen dem Kurbelwellenlagerzapfen und dem Hublagerauge eine Pleuellagerschale positioniert ist, wobei sich zwischen der Pleuellagerschale und dem Kurbelwellenlagerzapfen ein Schmierölfilm aufbauen kann.

Ein Verbrennungsmotor mit einstellbarem Verdichtungsverhältnis weist im Bereich jedes Pleuels 10 eine Exzenter-Verstelleinrichtung 13 zur Verstellung der effektiven Pleuelstangenlänge der jeweiligen Pleuelstange 10 auf. Die Exzenter-Verstelleinrichtung 13 weist einen Exzenter 36, einen Exzenterhebel 14 und Exzenterstangen 15, 16 auf, die abhängig von einem in mit dem den Exzenterstangen zusammenwirkenden Hydraulikkammern herrschenden Hydraulikdruck zur Einstellung des Verdichtungsverhältnisses verlagerbar sind. Die mit den Exzenterstangen 15, 16 zusammenwirkenden Hydraulikkammern sind ausgehend vom Hublagerauge 11 der jeweiligen Pleuelstange mit Hydrauliköl versorgbar. Die Verstellung der Exzenter-Verstelleinrichtung wird durch Einwirken von Massen- und Lastkräften des Verbrennungsmotors initiiert.

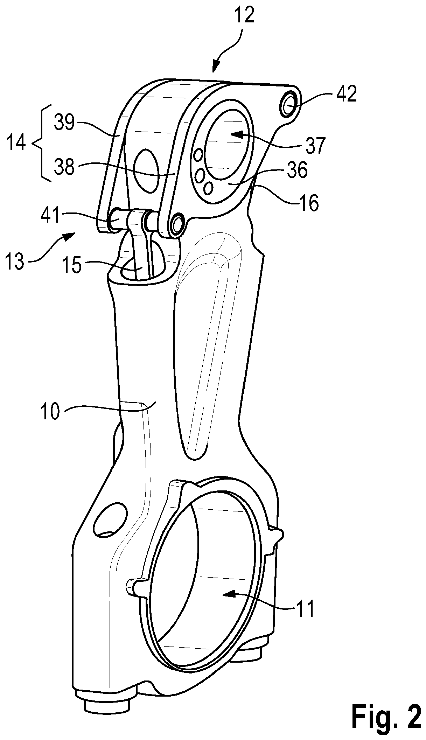

Der Exzenterhebel 14 weist eine Bohrung zur Aufnahme des Exzenters 36 auf, wobei der Exzenter 36 eine Bohrung 37 aufweist, die der Aufnahme eines sogenannten Kolbenbolzens dient. Der Exzenterhebel 14 weist mindestens ein Exzenterhebelsegment, im Ausführungsbeispiel der Fig. 1 bis 5 zwei Exzenterhebelsegmente 38, 39 auf, wobei in Axialrichtung des Exzenters 36 gesehen zu beiden Seiten des Pleuellagerauges 12 vor und hinter demselben jeweils eines der Exzenterhebelsegmente 38, 39 positioniert ist. Dabei ist, wie am besten Fig. 2 entnommen werden kann, das Pleuellagerauge 12 zwischen den beiden Exzenterhebelsegmenten 38, 39 des Exzenterhebels 14 angeordnet.

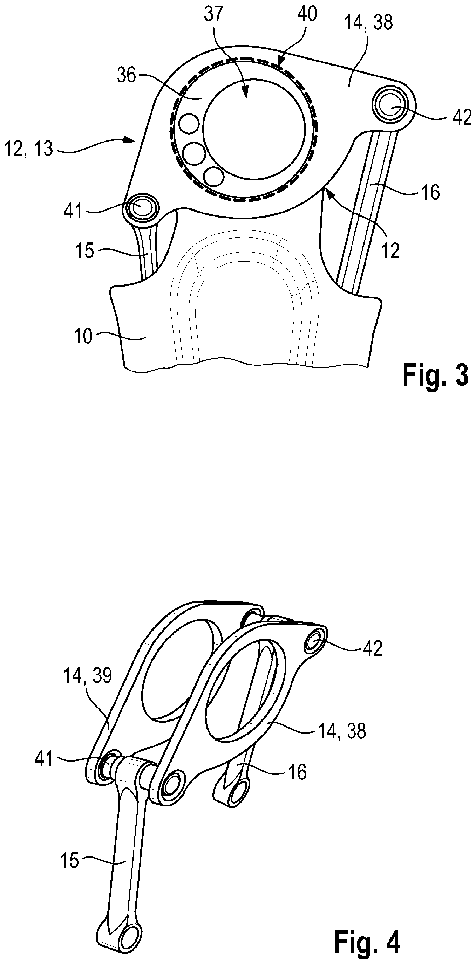

Die Exzenterhebelsegmente 38, 39 des Exzenterhebels 14 sind mit dem Exzenter 36 fest verbunden, wobei in Fig. 3 in gestrichelter Linienführung ein in Umfangsrichtung des Exzenters 36 umlaufender Verbindungsbereich 40 zwischen dem dort sichtbaren Exzenterhebelsegment 38 und dem Exzenter 36 gezeigt ist.

Vorzugsweise sind in diesem Verbindungsbereich 40 der Exzenter 36 und das Exzenterhebelsegment 38 des Exzenterhebels 14 durch Verschweißen fest verbunden. Dann, wenn, wie im Ausführungsbeispiel der Fig. 1 bis 5 gezeigt, in Axialrichtung des Exzenters 36 gesehen vor und hinter Pleuellagerauges 12 jeweils ein Exzenterhebelsegment 38, 39 positioniert ist, ist der Exzenter 36 mit beiden Exzenterhebelsegmenten 38, 39 fest verbunden, insbesondere durch Verschweißen.

Im Ausführungsbeispiel der Fig. 1 bis 5 sind die beiden Exzenterhebelsegmente 38, 39 des Exzenterhebels 14 als individuelle Baugruppen ausgebildet, die an seitlichen Enden über jeweils einen Verbindungsbolzen 41, 42 miteinander verbunden sind. An diesen Verbindungsbolzen 41, 42 greifen die Exzenterstangen 15, 16 gelenkig an, nämlich im Ausführungsbeispiel der Fig. 2 bis 5 unter Ausbildung eines Scharniergelenks zwischen den Exzenterstangen 15, 16 und den die beiden Exzenterhebelsegmente 38, 39 verbindenden Verbindungsbolzen 41, 42.

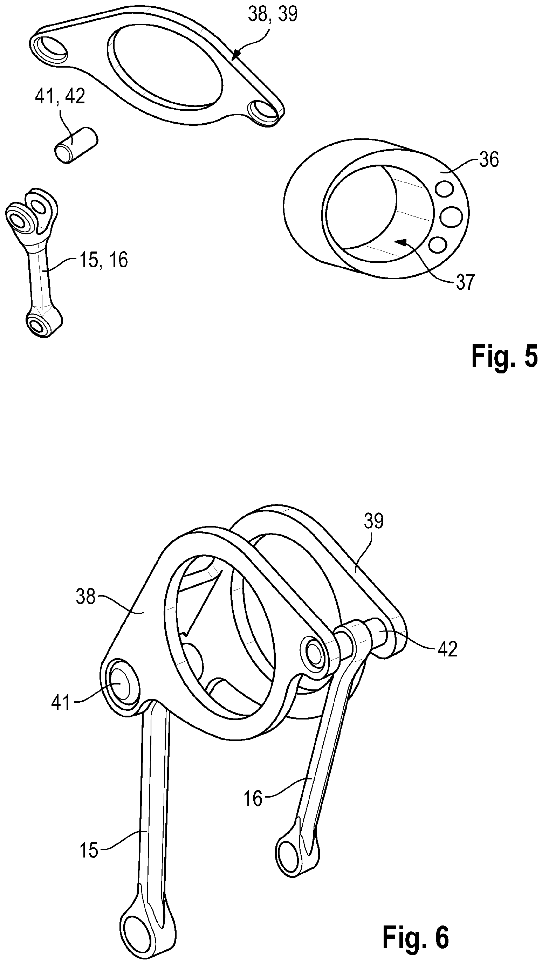

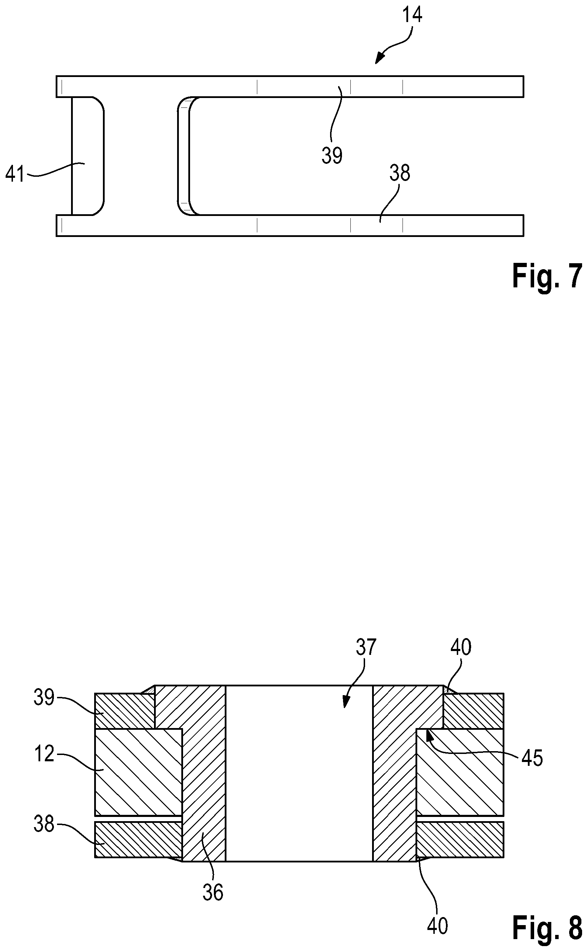

Fig. 6 und 7 zeigen eine Variante der Erfindung, in welcher der Exzenterhebel 14 als einstückige bzw. monolithisch Baugruppe ausgebildet ist, in welcher demnach die beiden Exzenterhebelsegmente 38, 39 desselben einstückig bzw. monolithisch ausgebildet sind. Die Exzenterstangen 15, 16 greifen an den Enden des einstückigen bzw. monolitischen Exzenterhebels 14 an demselben gelenkig an, nämlich wiederum über Verbindungsbolzen 41, 42, an welchen die Exzenterstangen 15, 16 unter Ausbildung eines Scharniergelenks angreifen.

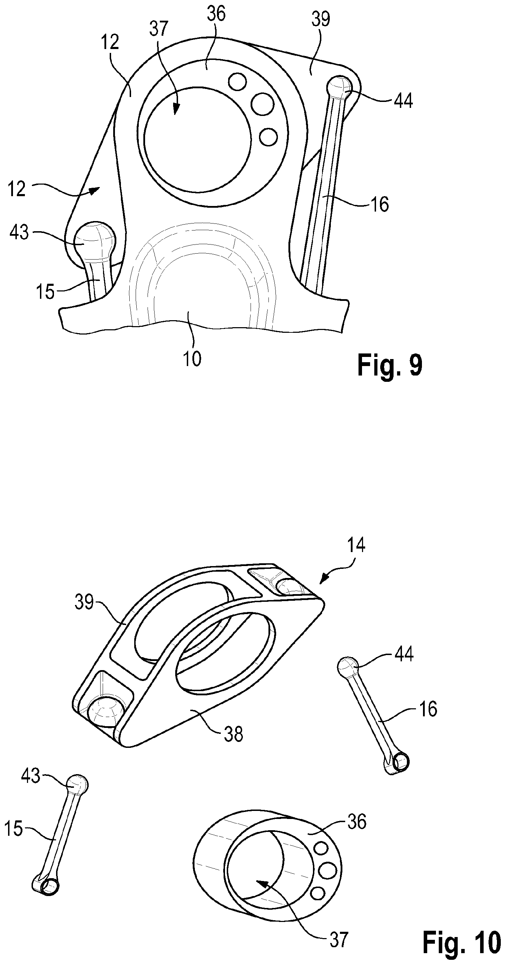

Eine weitere Variante der Erfindung mit einem einstückigen bzw. monolitischen Exzenterhebel 14 zeigen Fig. 9 und 10, wobei in Fig. 9 und 10 die beiden Exzenterstangen 15, 16 an den sich gegenüberliegenden Enden des Exzenterhebels 14 über Kugelgelenke 43, 44 angreifen.

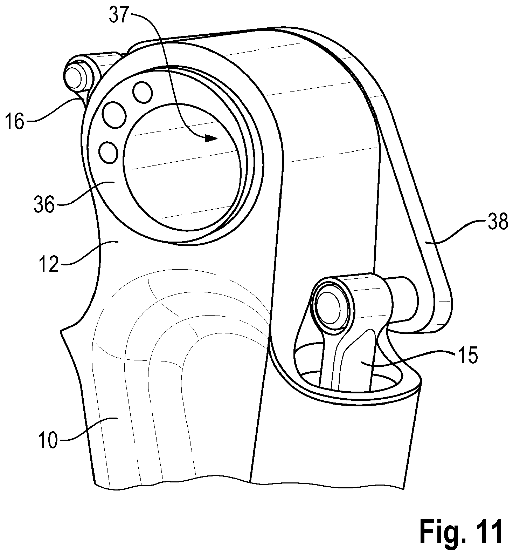

Fig. 11 zeigt eine Variante der Erfindung, in welcher der Exzenterhebel 14 ausschließlich ein Exzenterhebelsegment 38 aufweist, das an einer Seite des Pleuellagerauges 12 in Axialrichtung des Exzenters 36 gesehen vor oder hinter dem Pleuellagerauge 12 positioniert ist. Dabei ist im Bereich dieses Exzenterhebelsegments 38 der Exzenter 36 wiederum fest mit dem Exzenterhebelsegment 38 verbunden, insbesondere durch Verschweißen.

Der Exzenter 36 wird in Bohrungen der Exzenterhebelsegmente 38, 39 sowie in eine Bohrung im Pleuellagerauge 12 eingesetzt und durchdringt diese Bohrungen. Dies kann am besten Fig. 8 entnommen werden, wobei das Detail der Fig. 8 bei jedem der oben beschriebenen Varianten zum Einsatz kommen kann. Fig. 8 kann weiterhin entnommen werden, dass der Exzenter 14 mit beiden Exzenterhebelsegmenten 38, 39 in einem Verbindungsbereich 40, der vorzugsweise als umlaufende Schweißnaht ausgeführt ist, verbunden ist.

Um eine definierte Position des Exzenters 36 in den Bohrungen des Pleuellagerauges 12 sowie der Exzenterhebelsegmente 38, 39 zu gewährleisten, verfügt der Exzenter 36 über eine abgestufte Kontur, die einen Absatz 45 aufweist. Dieser Absatz 45 bildet einen Anschlag, der an einer Außenkontur des Pleuellagerauges 12 zur Anlage kommt und demnach die Relativposition des Exzenters 36 relativ zum Exzenterhebel 14 und damit zum Pleuellagerauge 12 definiert.

Wie Fig. 8 entnommen werden kann, verfügt dabei das Exzenterhebelsegment 39 über eine größere Bohrung als das Exzenterhebelsegment 38, wobei die Innendurchmesser dieser Bohrungen an den Außendurchmesser der abgestuften Kontur des Exzenters 36 angepasst sind.

Die Erfindung erlaubt eine einfache Montage und Fertigung einer Pleuelstange 10 eines Verbrennungsmotors mit einstellbarem Verdichtungsverhältnis.

Der Exzenter 36 ist mit dem Exzenterhebel 14 durch Verschweißen fest verbunden, wodurch eine vorteilhafte Drehmomentübertragung möglich ist und die Verschleißanfälligkeit reduziert werden kann.

Der Exzenterhebel 14 ist nicht mehr in eine schlitzförmige Ausnehmung in der Pleuelstange 10 eingesetzt, vielmehr ist das oder jedes Exzenterhebelsegment 38, 39 des Exzenterhebels 14 in Axialrichtung des Exzenters 36 gesehen vor bzw. hinter der Pleuelstange 10 positioniert, sodass nach dem Einführen des Exzenters 36 in den Exzenterhebel 14 und die Pleuelstange 10 der Exzenter 36 mit dem Exzenterhebel 14 insbesondere durch Verschweißen fest verbunden werden kann.

## Patentansprüche

1. Pleuelstange, mit einem Pleuellagerauge (12), mit einem Hublagerauge (11), und mit einer Exzenter-Verstelleinrichtung (13) zur Verstellung einer effektiven Pleuelstangenlänge, wobei die Exzenter-Verstelleinrichtung (13) der Pleuelstange einen mit einem Exzenterhebel (14) zusammenwirkenden Exzenter (36) aufweist, und wobei die Exzenter-Verstelleinrichtung (13) der Pleuelstange ferner an dem Exzenterhebel (14) angreifende Exzenterstangen (15, 16) aufweist, die von einem in mit den Exzenterstangen (15, 16) zusammenwirkenden Hydraulikkammern (22, 23) der Pleuelstange herrschenden Hydraulikdruck beaufschlagt sind, **dadurch gekennzeichnet, dass** der Exzenterhebel (14) mindestens ein Exzenterhebelsegment (38, 39) aufweist, dass das oder jedes Exzenterhebelsegment (38, 39) in Axialrichtung des Exzenters (36) gesehen vor und/oder hinter dem Pleuellagerauge (12) positioniert ist, und dass das oder jedes Exzenterhebelsegment (38, 39) mit dem Exzenter (36) fest verbunden ist.

2. Pleuelstange nach Anspruch 1, **dadurch gekennzeichnet, dass** der Exzenterhebel (14) zwei Exzenterhebelsegmente (38, 39) aufweist, wobei ein erstes Exzenterhebelsegment (38) in Axialrichtung des Exzenters (36) vor dem Pleuellagerauge (12) und ein zweites Exzenterhebelsegment (39) in Axialrichtung des Exzenters (36) hinter neben dem Pleuellagerauge (12) positioniert ist, derart, dass das Pleuellagerauge (12) zwischen den beiden Exzenterhebelsegmenten (38, 39) positioniert ist.

3. Pleuelstange nach Anspruch 2, **dadurch gekennzeichnet, dass** die beiden Exzenterhebelsegmente (38, 39) als individuelle Baugruppen ausgebildet und über Verbindungsbolzen (41, 42) verbunden sind, an welchen die Exzenterstangen (15, 16) gelenkig angreifen.

4. Pleuelstange nach Anspruch 2, **dadurch gekennzeichnet, dass** die beiden Exzenterhebelsegmente (38, 29) von einem einstückigen bzw. monolithischen Exzenterhebel (14) bereitgestellt sind, an welchem die Exzenterstangen (15, 16) gelenkig angreifen.

5. Pleuelstange nach einem der Ansprüche 1 bis 4, **dadurch gekennzeichnet, dass** der Exzenter (36) eine abgestufte Außenkontur mit einem Absatz (45) aufweist, wobei der Absatz (45) die Einführtiefe des Exzenters (36) in den Exzenterhebel (14) beschränkt.

6. Pleuelstange nach einem der Ansprüche 1 bis 5, **dadurch gekennzeichnet, dass** das oder jedes Exzenterhebelsegment (38, 39) des Exzenterhebels (14) mit dem Exzenter (36) verschweißt ist.

7. Verbrennungsmotor, welcher ein einstellbares Verdichtungsverhältnis aufweist, mit mindestens einem Zylinder und mit einer Kurbelwelle, an der mindestens eine Pleuelstange (10) angreift, wobei die oder jede Pleuelstange (10) ein Hublagerauge (11) zur Anbindung derselben an der Kurbelwelle, ein Pleuellagerauge (12) zur Anbindung derselben an einem Kolben eines Zylinders und eine Exzenter-Verstelleinrichtung (13) zur Verstellung einer effektiven Pleuelstangenlänge aufweist, und wobei die Exzenter-Verstelleinrichtung (13) einen mit einem Exzenterhebel (14) zusammenwirkenden Exzenter (36) und an dem Exzenterhebel (14) angreifende Exzenterstangen (15, 16) aufweist, die von einem in mit den Exzenterstangen (15, 16) zusammenwirkenden Hydraulikkammern (22, 23) herrschenden Hydraulikdruck beaufschlagt sind, **dadurch gekennzeichnet, dass** die oder jede Pleuelstange nach einem der Ansprüche 1 bis 6 ausgebildet ist.

## Claims

1. Connecting rod, having a connecting-rod bearing eye (12), having a crankpin bearing eye (11), and having an eccentric adjustment device (13) for the adjustment of an effective connecting rod length, wherein the eccentric adjustment device (13) of the connecting rod has an eccentric (36) which interacts with an eccentric lever (14), and wherein the eccentric adjustment device (13) of the connecting rod furthermore has eccentric rods (15, 16) which engage on the eccentric lever (14) and which are acted on by a hydraulic pressure prevailing in hydraulic chambers (22, 23), which interact with the eccentric rods (15, 16), of the connecting rod, **characterized in that** the eccentric lever (14) has at least one eccentric lever segment (38, 39), **in that** the or each eccentric lever segment (38, 39) is positioned in front of and/or behind the connecting-rod bearing eye (12) as viewed in an axial direction of the eccentric (36), and **in that** the or each eccentric lever segment (38, 39) is fixedly connected to the eccentric (36).

2. Connecting rod according to Claim 1, **characterized in that** the eccentric lever (14) has two eccentric lever segments (38, 39), wherein a first eccentric lever segment (38) is positioned in front of the connecting-rod bearing eye (12) in the axial direction of the eccentric (36) and a second eccentric lever segment (39) is situated behind and adjacent to the connecting-rod bearing eye (12) in the axial direction of the eccentric (36), such that the connecting-rod bearing eye (12) is positioned between the two eccentric lever segments (38, 39) .

3. Connecting rod according to Claim 2, **characterized in that** the two eccentric lever segments (38, 39) are formed as individual assemblies and are connected by means of connecting bolts (41, 42) on which the eccentric rods (15, 16) engage in articulated fashion.

4. Connecting rod according to Claim 2, **characterized in that** the two eccentric lever segments (38, 29) are provided by a single-piece or monolithic eccentric lever (14) on which the eccentric rods (15, 16) engage in articulated fashion.

5. Connecting rod according to any of Claims 1 to 4, **characterized in that** the eccentric (36) has a stepped outer contour with a shoulder (45), wherein the shoulder (45) limits the depth to which the eccentric (36) is inserted into the eccentric lever (14).

6. Connecting rod according to any of Claims 1 to 5, **characterized in that** the or each eccentric lever segment (38, 39) of the eccentric lever (14) is welded to the eccentric (36).

7. Internal combustion engine which has an adjustable compression ratio, having at least one cylinder and having a crankshaft on which at least one connecting rod (10) engages, wherein the or each connecting rod (10) has a crankpin bearing eye (11) for the connection of said connecting rod to the crankshaft, a connecting-rod bearing eye (12) for the connection of said connecting rod to a piston of a cylinder, and an eccentric adjustment device (13) for the adjustment of an effective connecting rod length, and wherein the eccentric adjustment device (13) has an eccentric (36) which interacts with an eccentric lever (14) and said eccentric adjustment device (13) has eccentric rods (15, 16) which engage on the eccentric lever (14) and which are acted on by a hydraulic pressure prevailing in hydraulic chambers (22, 23) which interact with the eccentric rods (15, 16), **characterized in that** the or each connecting rod is designed according to any of Claims 1 to 6.

## Revendications

1. Bielle comprenant un œil de coussinet de bielle (12), un œil de coussinet de course (11) et un dispositif de réglage d'excentrique (13) destiné à régler la longueur effective de la bielle, le dispositif de réglage d'excentrique (13) de la bielle comportant un excentrique (36) qui coopère avec un levier d'excentrique (14), et le dispositif de réglage d'excentrique (13) de la bielle comportant en outre des barres d'excentrique (15, 16) qui s'engagent avec le levier d'excentrique (14) et qui sont soumises à une pression hydraulique régnant dans les chambres hydrauliques (22, 23) de la bielle qui coopèrent avec les bielles d'excentrique (15, 16), **caractérisée en ce que** le levier d'excentrique (14) comporte au moins un segment de levier d'excentrique (38, 39), **en ce que** le ou chaque segment de levier d'excentrique (38, 39) est positionné devant et/ou derrière l'œil de coussinet de bielle (12) par référence à la direction axiale de l'excentrique (36), et **en ce que** le ou chaque segment de levier d'excentrique (38, 39) est relié de manière fixe à l'excentrique (36).

2. Bielle selon la revendication 1, **caractérisée en ce que** le levier d'excentrique (14) comporte deux segments de levier d'excentrique (38, 39), un premier segment de levier d'excentrique (38) étant positionné devant l'œillet de coussinet de bielle (12) par référence à la direction axiale de l'excentrique (36) et un deuxième segment de levier d'excentrique (39) étant positionné derrière l'œillet de coussinet de bielle (12) par référence à la direction axiale de l'excentrique (36) de telle sorte que l'œillet de coussinet de bielle (12) est positionné entre les deux segments de levier d'excentrique (38, 39).

3. Bielle selon la revendication 2, **caractérisée en ce que** les deux segments de levier d'excentrique (38, 39) sont conçus comme des ensembles individuels et sont reliés par le biais de boulons de liaison (41, 42) avec lesquels les barres d'excentriques (15, 16) s'engagent de manière articulée.

4. Bielle selon la revendication 2, **caractérisée en ce que** les deux segments de levier d'excentrique (38, 29) sont constitués par un levier d'excentrique monobloc ou monolithique (14) avec lequel les barres d'excentriques (15, 16) s'engagent de manière articulée.

5. Bielle selon l'une des revendications 1 à 4, **caractérisée en ce que** l'excentrique (36) présente un contour extérieur étagé pourvu d'un épaulement (45), l'épaulement (45) limitant la profondeur d'insertion de l'excentrique (36) dans le levier d'excentrique (14).

6. Bielle selon l'une des revendications 1 à 5, **caractérisée en ce que** le ou chaque segment de levier d'excentrique (38, 39) du levier d'excentrique (14) est soudé à l'excentrique (36).

7. Moteur à combustion interne qui présente un taux de compression réglable et qui comprend au moins un cylindre et un vilebrequin avec lequel s'engage au moins une bielle (10),
la ou chaque bielle (10) comportant un œil de coussinet de course (11) destiné à le relier au vilebrequin, un œil de coussinet de bielle (12) destiné à le relier à un piston d'un cylindre et un dispositif de réglage d'excentrique (13) destiné à régler une longueur de bielle effective, et le dispositif de réglage d'excentrique (13) comportant un excentrique (36), qui coopère avec un levier d'excentrique (14), et des barres d'excentrique (15, 16) qui s'engagent avec le levier d'excentrique (14), lesquelles sont soumises à une pression hydraulique régnant dans des chambres hydrauliques (22, 23) qui coopèrent avec les barres d'excentrique (15, 16), **caractérisé en ce que** la ou chaque bielle est conçue selon l'une des revendications 1 à 6.
